# EUROPÄISCHE PATENTSCHRIFT

(11) **EP 0 653 277 B1**
(45) Veröffentlichungstag und Bekanntmachung des Hinweises auf die Patenterteilung: **04.03.1998**
(21) Anmeldenummer: 94115898.2
(22) Anmeldetag: 20.10.1994
(51) Int. Cl.: B29B 13/06, F26B 5/08, F26B 17/22

(54) **Granulattrockner für abrasive und schlagempfindliche Kunststoffgranulate**
Drier for abrasives and plastic pellets which are shock sensitive
Dessiccateur pour abrasifs et granulats de matière thermoplastique sensibles aux chocs

(30) Priorität: 08.11.1993 DE 4338030
(43) Veröffentlichungstag der Anmeldung: 17.05.1995
(73) Patentinhaber: Werner & Pfleiderer GmbH, 70469 Stuttgart (DE)
(72) Erfinder: Rudolf, Joachim, Dipl.-Ing. (FH), D-71263 Weil der Stadt (DE)

(56) Entgegenhaltungen:
- DE-A- 4 106 248
- US-A- 4 476 019
- US-A- 4 565 015
- US-A- 4 896 435
- KUNSTSTOFFE, Bd.61, Nr.11, November 1971, MUNCHEN DE Seiten 801 - 802 VERNON DUDLEY 'ZENTRIFUGAL-ABSCHEIDER ZUM ENTWÄSSERN VON GRANULATEN'
- SOVIET PATENTS ABSTRACTS Section Ch, Week 8649, 18. Dezember 1986 Derwent Publications Ltd., London, GB; Class AJ, AN 86-324567/49 & SU-A-1 224 146 (MOSCOW CHEM. EQUIP. INST.) 15. April 1986

## Beschreibung

Die Erfindung betrifft einen Granulattrockner für abrasive und schlagempfindliche Kunststoffgranulate nach dem Oberbegriff des Anspruches 1.

Bei der Herstellung von Kunststoffgranulat werden Zentrifugaltrockner zur Trennung des Granulierwassers vom Granulat eingesetzt. Diese bekannten Zentrifugaltrockner bestehen im wesentlichen aus einem in einem Gehäuse vertikal angeordneten mit einem Siebkorb umgebenen Rotor. Das nasse oder feuchte Granulat wird dem Trockner am Boden zugegeben und über die am Rotor angeordneten Förderschaufeln nach oben zum Produktauslass gefördert. Im Bereich des Produktauslasses ist ein mit Auswurfschaufeln versehener Ventilator zur Unterstützung des Austragens des trockenen Kunststoffgranulates angeordnet. Das Wasser wird dabei durch das Sieb des Siebkorbes abgeschieden. Durch die Drehung des Rotors erzeugen dessen Förderschaufeln eine aufwärts gerichtete Luftströmung, die durch die Saugwirkung der Auswurfschaufeln des Ventilators noch verstärkt wird.

Aus der DE 41 06 248 C2 ist es bekannt durch Veränderung der Austragsschaufeln des am Austrag des Trockners angeordneten Ventilators den Druck im Trockner zu ändern.

Um die Verdunstung der Oberflächenfeuchte zu unterstützen ist es auch bekannt (z.B. Granulieren von thermoplastischen Kunstoffen, VDI Verlage 1974, Seiten 316-317) Luft entgegen der Förderrichtung durch das Gehäuse des Trockners zu führen. Dabei wird die feuchte Luft etwa in der Mitte des Trockners durch den Siebkorb hindurch nach aussen gesaugt. Hierbei bleibt bei einer zu hohen Luftgeschwindigkeit das Granulat an der Innenseite des Siebkorbes hängen und wird vermahlen.

Durch die Verbesserung der Wasservorabscheidung nach dem Granulierprozess hat der Zentrifugaltrockner oft nicht mehr die Hauptaufgabe grosse Mengen von Wasser abzuscheiden, sondern nur die Aufgabe Restfeuchte vom Kunststoffgranulat abzutrennen. Bei stark vorentwässerten Kunststoffgranulaten treten Probleme beim Eintrag in den Zentrifugaltrockner auf, da hier das Transportwasser fehlt.

Ein ähnlicher Granulattrockner mit teilweiser Luftrückführung und mit den gleichen Nachteilen wie vorstehend beschrieben ist aus der US-A-4476019 bekannt. Dieser Trockner weist dahingehend eine Besonderheit auf, daß der Rotor mit Antrieb und Siebkorb an der Innenseite einer schwenkbaren Seitenwand des Trockners befestigt ist.

In der US-A-4565015 wird ein Zentrifugal-Granulattrockner beschrieben, bei dem das feuchte Granulat durch einen im unteren Bereich des Trockners angeordneten Stutzen eingebracht und uber einen Stutzen am oberen Bereich des Trockners ausgetragen wird, wobei die Trockenluft durch den Granulat-Austragsstutzen ausgesaugt und mittels eines Ventilators am oberen Ende des Trockners ausgeblasen wird.

Der Erfindung liegt die Aufgabe zugrunde, einen Zentrifugaltrockner gemäss dem Oberbegriff des Patentanspruches 1 zu schaffen, der einen schonenden Transport von abrasiven und schlagempfindlichen Kunststoffgranulat durch den Trockner ermöglicht und trotzdem eine optimale Abscheidung der Restfeuchte vom Granulat gewährleistet.

Diese Aufgabe wird erfindungsgemäss durch die im Patentanspruch 1 angegebenen Merkmale gelöst. Vorteilhafte Weiterbildungen der Erfindung sind Gegenstand der abhängigen Ansprüche.

Durch eine geringe Umfangsgeschwindigkeit wird das empfindliche Granulat nur schwach gegen den Siebkorb geschleudert. Die Oberflächenfeuchte wird erfindungsgemäss vorwiegend durch eine im Gegenstrom geführte Trockenluft vom Granulat entfernt. Zur Vermeidung einer Verstopfung des Siebkorbes sind Bohrungen im Rotor vorgesehen, wodurch die mit Feuchtigkeit beladene Luft beidseitig aus dem Bereich der Förderschaufeln abgezogen wird. Hierdurch bleibt die freie Siebfläche des Siebkorbes offen.

Mit den Merkmalen des Patentanspruches 2 wird ein wirksamer Gegenstrom der Luft zum Granulat durch den gesamten Produktraum bis zum Boden des Trockners erreicht und zusätzlich der Produktzulauf in den Zentrifugaltrockner unterstützt.

Mit den Merkmalen des Anspruchs 3 sind vorteilhafte Parameter für die Trocknung von abrasiven und schlagempfindlichen Kunststoffgranulaute aufgezeigt.

Die Erfindung ist nachfolgend an Hand einer Zeichnung näher erläutert. Hierin zeigt:
- Fig. 1: einen Längsschnitt durch einen Zentrifugaltrockner
- Fig. 2: ein Schnitt B-B entsprechend Fig. 1 mit einem als Spaltsieb ausgebildeten Siebkorb 3
- Fig. 2a: einen vergrösserten Ausschnitt X aus Fig. 2
- Fig. 3: eine analoge Ansicht wie in Fig, 2, wobei der Siebkorb 3 als Conidursieb ausgebildet ist.

Der Zentrifugaltrockner besteht aus einem zylindrischen Blechmantel 1, in dem vertikal ein mit einem Siebkorb 3 umgebener Rotor 2 angeordnet ist. Nach unten ist der Blechmantel 1 mit einem mit Füssen 41 versehenen Boden 4 und oben mit einer Ringscheibe 6 verbunden. Zwischen Ringscheibe 6 und Boden 4 ist der Siebkorb 3, die Förderschaufeln 7 des Rotors 2 dicht umgebend, eingespannt. Zentrisch im Blechmantel 1 ist ein Motor 8 über einen inneren Blechmantel 25 der mit Streben 9 verstärkt ist am Boden 4 befestigt. Auf der nach oben weisenden Antriebswelle 10 des Motors 8 ist über eine auf der Antriebswelle 10 sitzende Büchse 11, die über Arme 12 mit der Innenwand des Rotors 2 verbunden ist, der Rotor 2 antreibbar gelagert. Oben ist über einen Deckel 13 der Rotor 2 verschlossen.
Ein als Rutsche ausgebildeter Produkteinlass 14 durchgreift den Blechmantel 1 und Siebkorb 3 und leitet das feuchte Granulat immer direkt auf die mit einen nach unten schneckenförmig verlaufenden Blechstreifen 7' versehenen unteren Forderschaufeln 7. Durch die Einzugswirkung der schneckenartigen Blechstreifen 7' wird insbesondere stark entwässertes Granulat gut eingezogen. Der Einzug des Granulates 14' wird dabei noch durch einen Unterdruck, der durch den Sog eines dem Produkteinlass 14 gegenüberliegende angeordneten Absaugstutzens 5 zugeordneten Saugventilators 52 erzeugt wird, unterstützt.

Über den Saugventilator 52 wird Trockenluft über die Luftzuführung 22 im Gegenstrom zum Granulat 14', das aufgrund der niederen Drehzahl des Rotors 2 (Umfangsgeschwindigkeit unter 10m/sec) nur schwach gegen den Siebkorb 3 geschleudert und auf einer spiralförmigen Bahn nach oben zum Austrag 16 gefordert wird, gezogen.

Die Oberflächenfeuchte wird dabei vorwiegend durch die im Gegenstrom (die relative Geschwindigkeit kann dabei 15-40 m/sec betragen) geführte Trockenluft vom Granulat 14' abgesaugt. Dabei wird die mit Feuchtigkeit beladene Luft sowohl durch den Siebkorb 3 als auch durch die Bohrungen 27 im Rotor 2 aus dem Bereich der Förderschaufeln 7 abgesaugt.
Im Bereich des Saugstutzens 5 ist der Siebmantel des Siebkorbes 3 als geschlossener Bereich 31 (ohne Löcher) ausgeführt. Hierdurch wird ein vermahlen des Granulates 14' durch die fehlende Saugwirkung, die nur in diesem Bereich über die Bohrungen 27 des Rotors 2 erfolgt, vermieden und zusätzlich die Saugwirkung auf dem Produkteinlass 14 verstärkt.
Der Absaugventilator 52 erreicht eine Gesamtdruckdifferenz von 150 mm Ws. Bei übersättigter Luft kann Wasser durch eine an der unteren Saugkammer 51 angeordneten Wasserklappe 53 abgelassen werden. Das Zwischenstück 56 zwischen Saugkammer 51 und Ventilator 52 ist mit einer Tropfkante 54 versehen. Der Saugventilator 52 wird durch einen Elektromotor 55 angetrieben. In Pfeilrichtung 56 wird die feuchte Luft weitergeleitet. Mit 57 ist ein Ablasshahn für angesammeltes Wasser bezeichnet.
Der Austrag 15 ist an einer mit Schnellspannverschlüssen 17 am Mantel 1 befestigten Auslasshaube 16 angeordnet. Diese Auslasshaube 16 liegt dabei auf der mit einer Dichtung 18 versehene Ringscheibe 6 auf. Zur Unterstützung des radialen Austrages des trockenen Granulats ist in der Auslasshaube 16 ein mit Auswurfschaufeln 21 ausgerüsteter Ventilator 19 angeordnet. Der Ventilator 19 ist über Schrauben 20 auf den Deckel 13 des Rotors 2 befestigt. Über im Deckel 13 vorgesehene konische Stifte 26 ist beim Wechseln des Ventilators 19 ein schnelles Zentrieren desselben möglich. Die Auswurfschaufeln 21 des Ventilators 19 sind zum Zwecke der Geräuscharmut rückwärts gekrümmt gestaltet und können in Abhängigkeit ihres äusseren Durchmessers einen erheblichen Einfluss auf die Druckverhältnisse im Trockner ausüben.

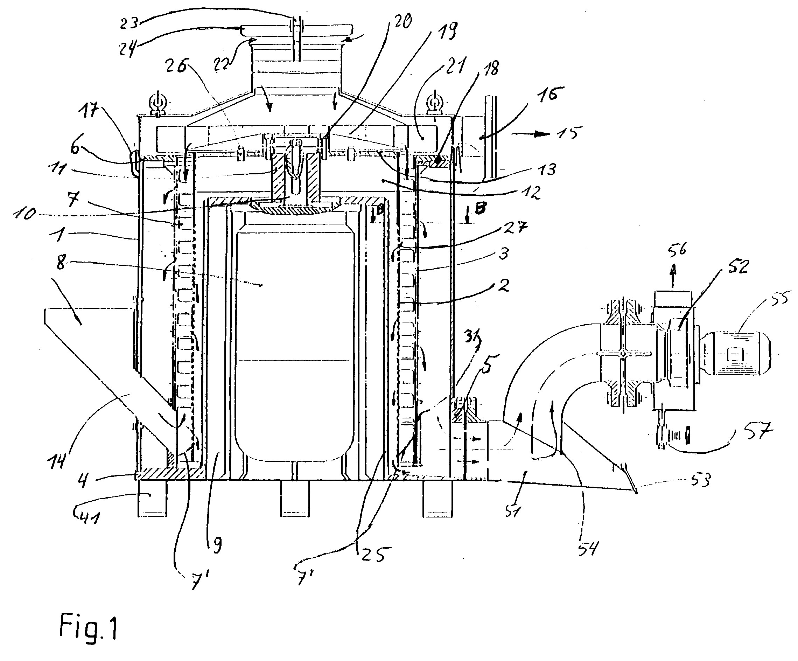

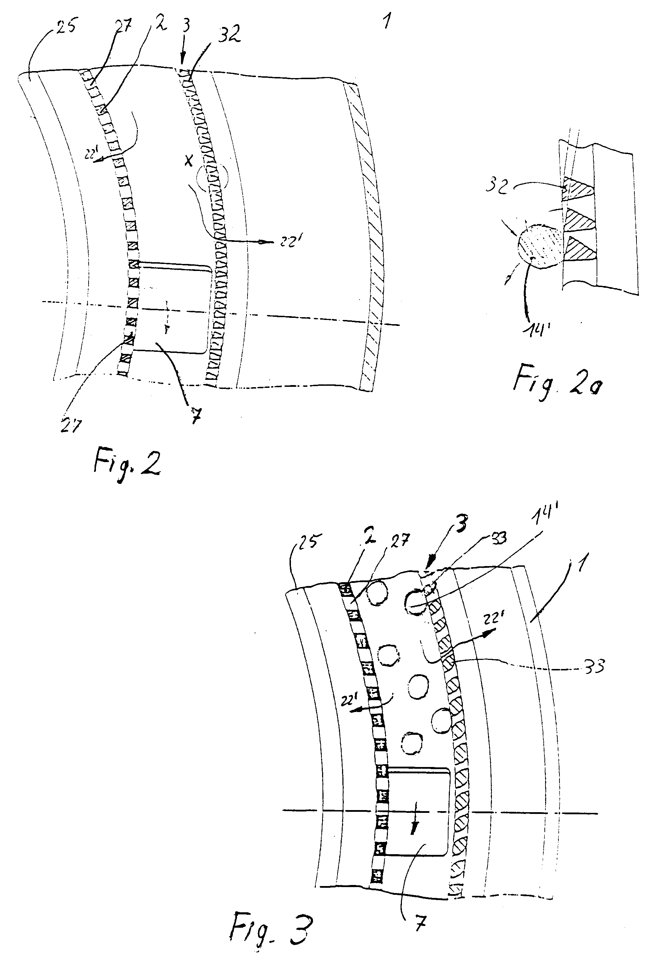

In Fig. 2 ist ein vergrösserter Ausschnitt entlang der Schnittlinie B-B aus Fig. 1 gezeigt. Hierbei ist der Siebkorb 3 als Spaltsieb mit versetzt angeordneten Profilstäben 32 (Fig. 2a) ausgebildet. Durch die Schrägstellung der Profilstäbe 32 trifft das Granulat 14' nicht auf der der Förderrichtung des Granulates zugewendeten Seite der Profilstäbe 32 auf.Hierdurch wird die Zerstörung des Granulates verhindert.

In Fig. 3 ist analog Fig. 2 ein Ausschnitt gezeigt, wobei hier der Siebkorb 3 aus einem Conidursieb 33 besteht.
Aus Fig. 2 und Fig. 3 ist nochmals deutlich durch die Pfeilrichtungen 22' die Absaugung der feuchten Luft nach beiden Seiten, durch den Siebkorb 3 und den Bohrungen 27 des Rotors 2, gezeigt. Durch die beidseitige Absaugung wird trotz relativer hoher Luftgeschwindigkeit ein Verstopfen der Löcher vermieden.
Zur Feinabstimmung des Gegenstromes der Luft kann die Breite der Luftzuführung 22 für den Ventilator 19 über die Stellschraube 23 und den Deckel 24 verändert werden.

## Patentansprüche

1. Granulattrockner für abrasive und schlagempfindliche Kunststoffgranulate bestehend aus einem in einem Gehäuse (1) vertikal angeordneten mit einem Siebkorb (3) umgebenen Rotor (2), der zur Förderung des in einem unteren Produkteinlass (14) zugeführten feuchten Kunststoffgranulats (14') zu einem oben angeordneten Produktauslass (15) mit über den Rotorumfang verteilt und übereinander angeordneten Förderschaufeln (7) versehen ist, wobei im Bereich des Produktauslasses (15) ein mit Auswurfschaufeln (21) und verstellbaren Luftschlitzen (22) versehener Ventilator (19) angeordnet ist, dadurch gekennzeichnet, dass am Umfang des Rotors (2) im Bereich der Förderschaufeln (7) Bohrungen (27) vorgesehen sind und in Bodennähe des Trockners ein Absaugventilator (52) mit einem Absaugstutzen (5) zum Absaugen von im Gegenstrom zum Granulat (14') geführter Trockenluft nach deren Befeuchtung angeschlossen ist, wobei der Rotor (2) mit reduzierter Drehzahl und der Saugventilator (52) derart betreibbar sind, dass sich im Trockner eine relative Geschwindigkeit des Granulates (14') zur Trockenluft zwischen 10 bis 40m/sc einstellt.

2. Granulattrockner nach Anspruch 1, dadurch gekennzeichnet, dass der Absaugstutzen (5) des Absaugventilators (52) gegenüber dem Produkteinlass (14) angeordnet ist, wobei im Bereich des Absaugstutzens (5) der Siebkorb (3) als geschlossener Bereich (31) ausgebildet ist.

3. Granulattrockner nach den Ansprüchen 1 und 2, dadurch gekennzeichnet, dass der Saugventilator (52) mit einer Gesamtdruckdifferenz bis zu 200 mm Ws betreibbar ist.

## Claims

1. Granulate drier for abrasive and impact-sensitive synthetic material granulates, consisting of a rotor (2) which is vertically arranged in a housing (1) and surrounded by a sieve basket (3) and which is provided for the conveying of the moist synthetic material granulate (14'), which is fed into a lower product inlet (14), to an upwardly arranged product outlet (15) by conveying scoops (7) arranged one above the other and distributed over the rotor circumference, wherein a ventilator (19) provided with thrower scoops (21) and adjustable air slots (22) is arranged in the region of the product outlet (15), characterised thereby that bores (27) are provided at the circumference of the rotor (2) in the region of the conveying scoops (7) and a suction ventilator (52) with a suction connection (5) for sucking away drying air, which is guided in counterflow to the granulate (14'), after the moistening thereof is connected in the proximity of the base of the drier, wherein the rotor (2) at reduced rotational speed and the suction ventilator (25) are operable in such a manner that a relative speed of the granulate (14') to the drying air of between 10 to 40 metres per second sets in in the drier.

2. Granulate drier according to claim 1, characterised thereby that the suction connection (5) of the suction ventilator (52) is arranged opposite the product inlet (14), wherein the sieve basket (3) is formed as a closed region (31) in the vicinity of the suction connection (5).

3. Granulate drier according to claims 1 and 2, characterised thereby that the suction ventilator (52) is operable with an overall pressure difference of up to 200 millimetres Ws.

## Revendications

1. Dessiccateur pour granulés de matière de synthèse, abrasifs et sensibles aux chocs, constitué d'un rotor (2) disposé verticalement dans un corps (1) et entouré d'une corbeille (3) formant tamis, lequel rotor est muni, en vue du transport du granulé (14') de matière de synthèse humide amenée dans un dispositif inférieur (14) d'entrée de produit, jusqu'à un dispositif (15) de sortie de produit disposé en haut, de pales de transport (7) disposées en étant réparties sur la périphérie du rotor et les unes au-dessus des autres, un ventilateur (19), muni de pales d'éjection (21) et de fentes réglables (22) pour l'air, étant disposé dans la zone du dispositif d'évacuation (15) de produit, dessiccateur caractérisé en ce que des perçages (27) sont prévus dans la périphérie du rotor (2) dans la zone des pales de transport (7) et en ce qu'à proximité de la base du dessiccateur est raccordé un ventilateur d'aspiration (52) comportant un embout d'aspiration (5), destiné à aspirer l'air sec conduit à contre-courant du granulé (14'), après qu'il a été humidifié, le rotor (2) pouvant être entraîné à vitesse de rotation réduite, et le ventilateur d'aspiration (52) pouvant être entraîné, de façon telle que dans le dessiccateur s'établisse une vitesse relative du granulé (14'), par rapport à l'air sec, de 10 à 40 m/s.

2. Dessiccateur pour granulés selon la revendication 1, caractérisé en ce que l'embout d'aspiration (5) du ventilateur d'aspiration (52) est disposé en face du dispositif (14) d'entrée de produit, la corbeille (3) formant tamis étant constituée en zone fermée (31) dans la zone de l'embout d'aspiration (5).

3. Dessiccateur pour granulés selon les revendications 1 et 2, caractérisé en ce que le ventilateur d'aspiration (52) peut être entraîné avec une différence totale de pression allant jusqu'à 200 mm de colonne d'eau.
